# EUROPEAN PATENT APPLICATION

(11) **EP 3 162 938 A1**
(43) Date of publication of application: **03.05.2017**
(21) Application number: 16196342.6
(22) Date of filing: 28.10.2016
(51) Int. Cl.: D04H 1/4374, B32B 5/02, B32B 5/26, D04H 1/46, D04H 1/498, D04H 1/559

(54) **DOUBLE LAYER NEEDLEPUNCH NON-WOVENS**

(30) Priority: 28.10.2015 US 201562247353 P
(71) Applicant: THRACE-LINQ, INC., Summerville, SC 29483-9665 (US)
(72) Inventor: SPARKS, Brian E, Summerville, SC South Carolina 29483 (US); LAKE, Andreas, Mt Pleasant, SC South Carolina 29466 (US)
(74) Representative: McCartney, Jonathan William

(57) **Abstract**

A non-woven material including a base layer and one or more fiber cap layer. In example embodiments, the fiber cap layer can be (1) used as an adhesive layer to bond the base layer to another material, (2) molded in order to create a smooth film surface that reduces ice, mud and snow buildup in the automotive part, (3) molded to increase stability and reduce sagging in the automotive part, or (4) molded into an air flow resistant layer to increase sound absorption properties. The non-woven material can be heat-resistant, flame-resistant, water-resistant, and/or recyclable.

## Description

### Cross-Reference to Related Application

This application claims the priority benefit of U.S. Provisional Patent Application Serial No. 62/247,353 filed on October 28, 2015, which is hereby incorporated by reference herein.

### Technical Field

The present invention relates generally to the field of non-woven materials, and more particularly to a moldable and heat-resistant non-woven material, such as for example, for use in automotive applications.

### Background

Non-woven materials are used for various purposes, including without limitation in automotive applications. Needs exist for improved non-woven materials suitable for use as thermal and acoustic insulators, weatherproofing barriers and underbody shields, and the like. Demands on non-woven fabrics for automotive continue to increase, as engines are running hotter and non-wovens are used in increasingly more exterior facing applications. Accordingly, it can be seen that needs exist for improved non-woven materials for use in automotive applications. It is to the provision of improved non-woven materials meeting these and other needs that the present invention is primarily directed.

### Summary

In example embodiments, the present invention provides improved non-woven materials. Example forms of the non-woven materials are adaptable to automotive applications, such as for example wheel house liners and body shields, thermal shielding for engine compartments and exhaust components, and underbody shields to reduce ice or mud buildup. Optionally, the non-woven materials are moldable, heat-resistant, and/or recyclable, and may provide an adhesive or smooth film surface on one or both sides.

In one aspect, the invention relates to a non-woven material including a base layer having a top side and a bottom side, and a fiber cap layer configured to overlie at least one of the sides of the base layer. In example embodiments, the fiber cap layer includes a non-woven fibrous coating material layed onto the scrim base layer, and needle-punched into the base layer to form an integral non-woven material. Optionally, the non-woven fibrous coating material is carded onto the base layer, and needle-punched into the base layer to form an integral non-woven material.

In example embodiments, the base layer includes a non-woven fibrous batting material including a plurality of fibers formed from at least one material selected from PET, CoPET (with various melting temperatures), PET Undrawn, PET modified, PET undrawn Co-pet, PET PP and PET PE. According to one example form, the base layer includes 100% PET fiber. In example embodiments, the fibers of the base layer have a nominal length of about 50 - 102 millimeters and a denier between about 1.7 and 10. In example embodiments, the base layer has a density of between about 2 ounces per square yard of material to about 200 ounces per square yard of material. In some example embodiments, the base layer has a density of between about 2 ounces per square yard of material to about 70 ounces per square yard of material.

In some example embodiments, the fiber cap layer is formed from an adhesive fiber material. In example embodiments, the fiber cap layer includes a plurality of fibers formed from at least one material selected from Bico PET fiber (with various melting temperatures), PE fiber, PP fiber, co-polyesters, undrawn polyester and undrawn Bico Polyester. In example embodiments, the fibers of the fiber cap layer have a nominal length of about 30-120 millimeters and a denier between 1.0 and 8. In example embodiments, the fiber cap layer has a density of about 0.25 ounce per square yard of material to about 50 ounces per square yard of material. In other example embodiments, the fiber cap layer has a density of about 0.5 ounce per square yard of material to about 10 ounces per square yard of material. According to one example embodiment, the fibers forming the fiber cap layer are formed from an undrawn amorphous PET fiber having a melting point of about 165ºC. According to another example embodiment, the fibers forming the fiber cap layer include a Crystalline type LMF RM or a modified polyester. Optionally, a fiber cap layer applied to the bottom side of the base layer. In example embodiments, with the fiber cap layer applied to each side of the base layer, the resulting material provides for enhanced sound absorption.

In another aspect, the invention relates to an automotive component formed from a non-woven material including a base layer having a non-woven fibrous batting material including a top side and a bottom side, and a fiber cap layer applied to at least one of the sides of the base layer. The fiber cap layer includes a non-woven fibrous coating material applied onto the scrim base layer, and needle-punched into the base layer to form an integral non-woven material. The base layer includes a non-woven fibrous batting material having a plurality of fibers formed from at least one material selected from PET, CoPET (with various melting temperatures), PET Undrawn, PET modified, PET undrawn Co-pet, PET PP and PET PE. The fiber cap layer includes a plurality of fibers formed from at least one material selected from Bico PET fiber (with various melting temperatures), PE fiber, PP fiber, co-polyesters, undrawn polyester and undrawn Bico Polyester.

In example embodiments, the non-woven material can be molded by pressure and heat-forming to form a component for attachment to a vehicle. According to example forms, the component can be a wheel house liner, an underbody shield, or an engine compartment or exhaust component heat shield. According to example embodiments, the molded component has flame-resistant and water-repellent properties, and is configured to reduce ice and mud build-up. According to some example embodiments, a fiber cap layer applied on to the other side of the base layer, and needle-punched into the base layer to form an integral non-woven material of three layers.

In still another aspect, the invention relates to a method of forming a non-woven material including providing a base layer formed from a non-woven fibrous batting material having a plurality of fibers, the base layer having a top side and a bottom side; providing a fiber cap layer including a non-woven fibrous coating material; applying the fiber cap layer onto a top side of the base layer; and needle-punching the fiber cap layer into the base layer to form an integral non-woven material. According to one example embodiment, the fiber cap layer is air-layed onto the base layer. According to another example embodiment, the fiber cap layer is carded onto the base layer. In example embodiments, the method further includes applying a second fiber cap layer onto a bottom side of the base layer. In some example embodiments, the method further includes needle-punching the second fiber cap layer into the base layer to form an integral non-woven material.

These and other aspects, features and advantages of the invention will be understood with reference to the drawing figures and detailed description herein, and will be realized by means of the various elements and combinations particularly pointed out in the appended claims. It is to be understood that both the foregoing general description and the following brief description of the drawings and detailed description are exemplary and explanatory of embodiments of the invention, and are not restrictive of the invention, as claimed.

### Brief Description of the Drawings

**FIGURE 1** shows a non-woven material according to an example embodiment of the present invention.
**FIGURE 2** show a cross-sectional view of the non-woven material of **Figure 1****.**
**FIGURE 3** shows a perspective view of a non-woven material according to another example embodiment of the present invention.
**FIGURE 4** shows a cross-sectional view of the non-woven material of **Figure 3****.**
**FIGURE 5** shows a molded non-woven material being used as a wheel house liner according to another example embodiment of the present invention.
**FIGURE 6** shows a molded non-woven material being used as an underbody shield according to another example embodiment of the present invention.
**FIGURE 7** shows a molded non-woven material being used as an engine compartment shield or barrier according to another example embodiment of the present invention.
**FIGURE 8** shows a cross-sectional view of a non-woven material assembly fastened to the hood of a vehicle and being used as an engine compartment shield or barrier according to another example embodiment of the present invention.

### Detailed Description of Example Embodiments

The present invention may be understood more readily by reference to the following detailed description of example embodiments of the invention taken in connection with the accompanying drawing figures, which form a part of this disclosure. It is to be understood that this invention is not limited to the specific devices, methods, conditions or parameters described and/or shown herein, and that the terminology used herein is for the purpose of describing particular embodiments by way of example only and is not intended to be limiting of the claimed invention. Any and all patents and other publications identified in this specification are incorporated by reference as though fully set forth herein.

Also, as used in the specification including the appended claims, the singular forms "a," "an," and "the" include the plural, and reference to a particular numerical value includes at least that particular value, unless the context clearly dictates otherwise. Ranges may be expressed herein as from "about" or "approximately" one particular value and/or to "about" or "approximately" another particular value. When such a range is expressed, another embodiment includes from the one particular value and/or to the other particular value. Similarly, when values are expressed as approximations, by use of the antecedent "about," it will be understood that the particular value forms another embodiment.

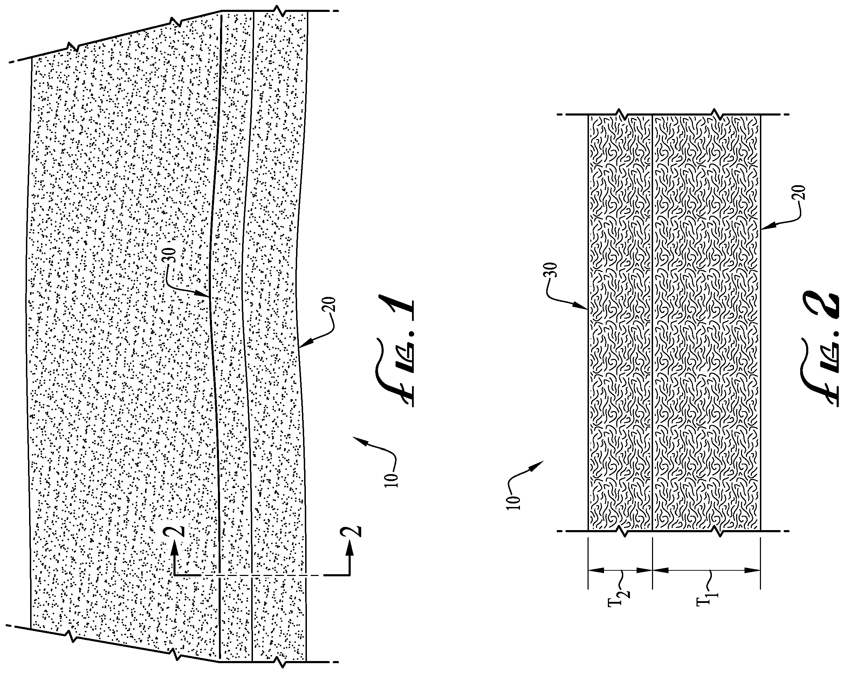

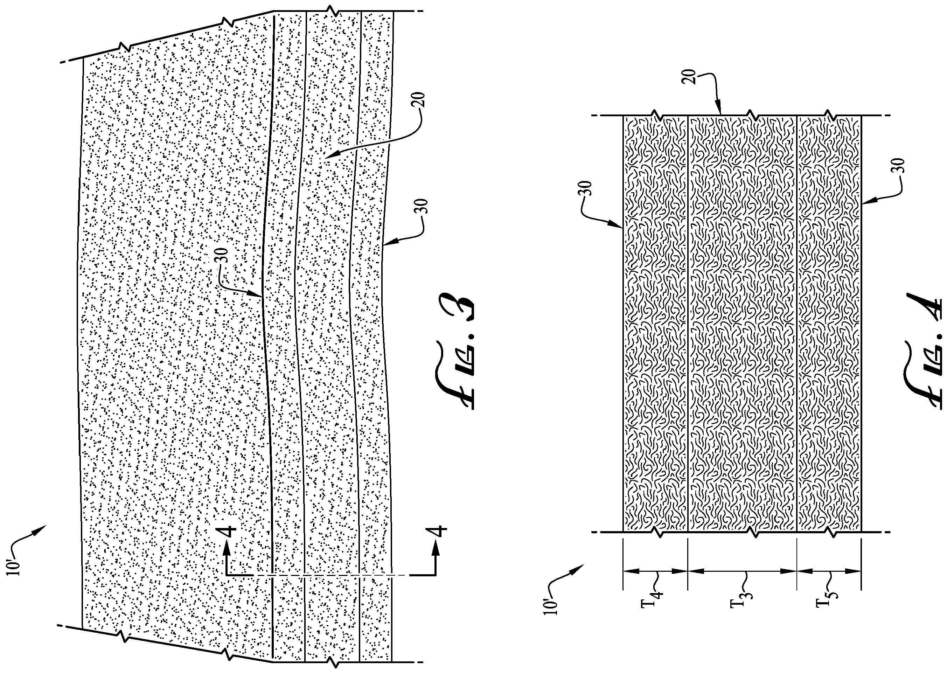

With reference now to the drawing figures, wherein like reference numbers represent corresponding parts throughout the several views, **Figures 1-2** show a non-woven material 10 according to an example embodiment of the invention. In example embodiments, the material 10 generally comprises a scrim or base layer 20, and a cap layer 30. The cap layer 30 overlies at least one side (top or bottom) of the scrim or base layer 20, and optionally can be applied to overlie both the top and bottom sides of the scrim or base layer, wherein the scrim or base layer 20 is sandwiched between top and bottom cap layers 30 (see **Figures 3-4**). In the depicted embodiment, the cap layer 30 is applied to the top of the scrim or base layer 30.

The scrim or base layer 20 can comprise a PET (polyethylene-terephthalate), PET CoPET (with various melting temperatures), PET Undrawn, PET modified, PET undrawn Co-pet, PET PP (polypropylene), PET PE (polyethylene) and mixes of all, and/or other non-woven fibrous batting or material. In example embodiments, fibers having a nominal length of approximately 2 - 4 inches and a denier between 1.7 and 10 may be utilized to form the non-woven scrim or base layer 20. In example embodiments, the base layer 20 has a density of at least about 2 ounces per square yard of material (e.g., 2 oz. / yd²). Generally, in most applications, the base layer 20 comprises a density of between about 2 ounces per square yard of material to about 70 ounces per square yard of material (e.g., 2 oz. / yd²- 70 oz. / yd²). In alternate example embodiments, the density of the base layer 20 can be chosen as desired, for example, which may be between about 2 ounces per square yard of material to about 200 ounces per square yard of material.

The fiber cap layer 30 can comprise a non-woven fibrous coating material layed or carded onto the scrim or base layer 20, and needle-punched into the scrim or base layer 20 to form an integral non-woven material 10. According to one example embodiment, the non-woven fibrous coating material of the fiber cap layer 30 is air-layed onto the scrim or base layer 20. In example forms, at least about 0.5 ounce of coating material per square yard (1/2 oz. / yd²) is applied to the scrim or base layer 20. According to some example embodiments of the present invention, the fiber cap layer 30 can comprise a density of between about 0.5 ounce per square yard of material to about 10 ounces per square yard of material. In alternate example embodiments, the density of the fiber cap layer 30 can be chosen as desired, for example, which may be between about 0.25 ounce per square yard of material to about 50 ounces per square yard of material. The material 10 can optionally be molded, for example by pressure and/or heat-forming, to form various components, shapes or product configurations. For example, as will be described below, the material 10 can be molded to form an automotive component, for example a wheel house liner, body shield, engine compartment or exhaust component heat shield, or underbody shield to reduce ice and mud build-up.

In example embodiments and as depicted in **Figure 2****,** the scrim or base layer 20 comprises a thickness T1 and the fiber cap layer 30 comprises a thickness T2. According to one example embodiment, the scrim or base layer 20 comprises a density of about 3 ounces per square yard of material, for example, which results in a thickness T1 of about 61 mil (e.g., 0.061 inch). And the fiber cap layer 30 comprises a density of about 0.5 ounce per square yard of material, for example, which results in the thickness T2 of the fiber cap layer 30 being about 5 mil (e.g., 0.005 inch). According to another example embodiment, the scrim or base layer 20 comprises a density of about 42 ounces per square yard of material and the fiber cap layer 30 comprises a density of about 3 ounces per square yard of material. Thus, the scrim or base layer 20 comprises a thickness T1 of about 244 mil (e.g., 0.244 inch) and the fiber cap layer comprises a thickness T2 of about 26 mil (e.g., 0.026 inch).

In example embodiments, various materials may be utilized to form the air-layed or carded layer fiber cap layer 30, for example, depending on the intended application or desired product characteristics. According to example embodiments, the fiber cap layer 30 can act as an adhesive or glue for attaching the material 10 to another component or material instead of traditional adhesives such as powder coating, film resin, etc.

In example embodiments, through use of a fiber (or fibrous adhesive) instead of a powder-based adhesive, additional fiber coverage can be provided while keeping the total weight of the material the same, for example, as the fiber becomes part of the final product, thereby adding value rather than only adding weight. For example, if the additional cover function is not needed (e.g., the additional fiber coverage added to the fiber cap layer 30 and acting as the adhesive), the weight of the product can be reduced since the adhesive powder only adds weight to the product for bonding purposes (no additional value). For example, according to some example embodiments of the present invention, the weight or density of the fiber cap layer 30 can be reduced before being needle punched with the scrim or base layer 20, for example, thereby reducing the density of the fiber cap layer 30 by the weight of the added fiber acting as the adhesive.

According to another example embodiment of the present invention, the fiber cap layer 30 is entirely formed from the fibrous adhesive, and the weight of the base layer 20 can be configured as desired to compliment the weight of the fiber cap layer 30, for example, to result in a desired weight non-woven material once the fiber cap layer 30 is needle-punched into the base layer 20. In example embodiments, the adhesive fiber stays positioned better on the surface during manufacture and will not migrate into the product even if heated several times. This improves performance, and avoids the common bleed through problem of powdered materials in a mold. Various fiber material options can be utilized to form the adhesive fiber cap layer 30, including 110º -180º Celsius Bico (bicomponent) PET (polyethylene-terephthalate) fiber, PE (polyethylene), PP (polypropylene) fiber, co-polyesters, modified polyesters, undrawn polyester, undrawn Bico Polyester and/or blends thereof. In alternate embodiments, a fiber which reacts like a phenolic resin and which can only be used one time, may be utilized, for example to provide a very high heat resistance (over 220º C) after it is molded. For example, an undrawn amorphous polyester fiber which can be used either as a 100% amorphous or as a Bico amorphous fiber can be utilized to form the adhesive fiber cap layer 30.

In example embodiments, the fibers forming the fiber cap layer 30 may be between about 1.0 denier to about 8 denier, and have a length of between about 30 to about 120 millimeters. According to some example embodiments, the fibers forming the fiber cap layer 30 may comprise an undrawn modified PET with a melting point of 165ºC, which melts and flows at this temperature and becomes a regular PET fiber with a melting point of +220ºC after cooling down from the 165ºC and reheating it. According to other example embodiments, the fibers forming the fiber cap layer 30 may comprise a Bico fiber (e.g. from Huvis) such as a Crystalline type LMF RM, which is produced by bicomponent spinning of modified polyester through flexible and highly crystallized molecular chain polymerization, which can be melted at low temperature (160°C), and which is not transformed at high temperature after being bonded and formation. According to another example embodiment, the fibers forming the fiber cap layer 30 comprise a modified polyester.

The fiber cap layer 30 can be applied to various types of scrim layers 20, for example, to bond or laminate the material 10 to Glass fiber, foam, aluminum film, or other materials. The scrim layer 20 may for example comprise a 100% PET fiber without any additional chemicals. In alternate embodiments, different scrim layer 20 components and/or additives can be utilized to provide desired product properties, for example regarding stiffness/softness, flame-resistant (FR) properties, and water-repellent properties, depending on the desired product characteristics. Since the bonding or adhesive is provided by the fiber blend there is no need to use a separate binder. Binder material adds only weight to a product and can be highly flammable, meaning it requires a high amount of FR chemicals to keep it flame resistant. A 100% PET scrim has by its nature already a certain FR resistance which can be increased by addition of a FR PET fiber. According to one example embodiment, a scrim or base layer 20 is formed from an undrawn amorphous polyester material to create a highly heat resistant product.

According to another example embodiment of the present invention, the material 10 can comprise a fiber cap layer 30 applied to each side of the base layer 20. **Figures 3-4** show a material 10' according to another example embodiment of the present invention. As depicted, the material 10' comprises a scrim or base layer 20 sandwiched between fiber cap layers 30. For example, instead of the fiber cap layer 30 being provided only on one side of the scrim or base layer 20 as shown in the material 10, the fiber cap material 30 is provided on both the top and bottom sides of the scrim or base layer 20. As depicted in **Figure 4****,** the scrim or base layer 20 comprises a thickness T3, a first fiber cap layer 30 comprises a thickness T4, and a second fiber cap layer 30 comprises a thickness T5. According to one example embodiment, the scrim or base layer 20 comprises a density of about 3 ounces per square yard of material and the first and second fiber cap layers 30 comprise a density of about 0.5 ounce per square yard of material. As such, the thickness T3 of the scrim or base layer 20 is about 61 mil (e.g., 0.061 inch) and the thicknesses T4, T5 are about 5 mil (e.g., 0.005 inch). According to another example embodiment, the scrim or base layer 20 comprises a density of about 42 ounces per square yard of material and the fiber cap layers 30 comprise a density of about 3 ounces per square yard of material. Thus, the scrim or base layer 20 comprises a thickness T3 of about 244 mil (e.g., 0.244 inch) and the fiber cap layers 30 comprise thicknesses T4, T5 of about 26 mil (e.g., 0.026 inch).

In example embodiments, the invention includes a material formed as described, comprising a double layer (scrim or base layer, and fiber cap layer), with the fiber cap layer forming a glue or adhesive coating on one side of the material for attachment or bonding of the material to various components (for example automotive components) or other materials. In alternate forms, a three layer material can be formed by providing a fiber cap layer on both sides of the scrim or base layer, for example, as depicted in **Figures 3-4****.** In other forms, the invention includes a material formed as described, comprising a smooth film or surface formed from the fiber cap layer on at least one side of the scrim or base layer, to resist mud or snow buildup on the material. Optionally, the material is heat resistant to at least 110º C, 180º C, or 220º C, and/or is recyclable and/or formed of one or more recycled components.

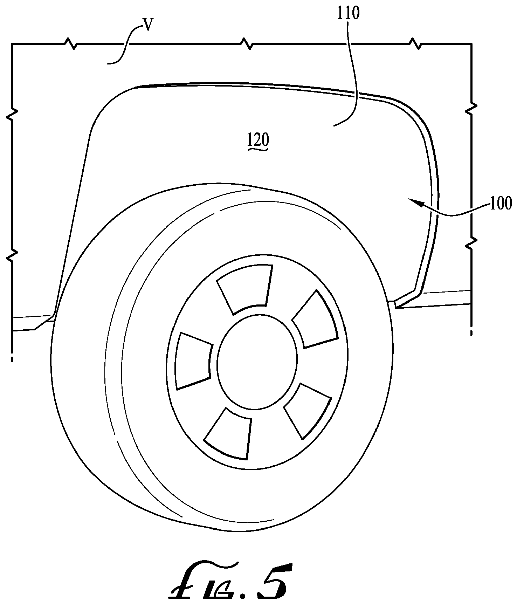

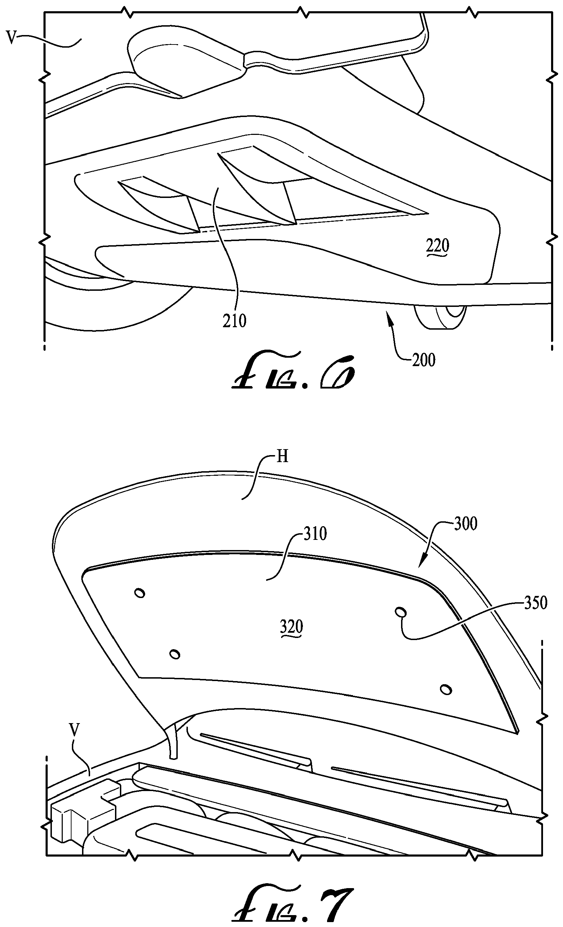

According to example embodiments, the fiber cap layer 30 can be applied to various scrim or base layers 20 to create a smooth film or surface on a product or material molded from the material 10. Example applications include a wheel house liner or an underbody shield to reduce ice or mud buildup and increase stiffness and/or eliminate sag. For example, a wheel house liner 100 is shown in **Figure 5** and comprises a molded liner member 110, which is generally sized and shaped to line the wheel house or wheel well of the vehicle V. This could be done with various bonding fibers as described. In particular example embodiments, with the use of an undrawn amorphous polyester, modified PET fiber or high Crystalline bicomponent polyester, the fiber cap layer 30 results in a smooth film or surface 120 that resists material buildup. **Figure 6** shows an underbody shield 200 comprising a molded shield member 210, which is generally sized and shaped for mounting to an underside portion of a vehicle. As similarly described with respect to the wheel house liner 100, the fiber cap layer, when molded, results in a smooth and substantially rigid surface 220, which acts to reduce ice or mud build-up and increase stiffness and/or eliminate sag. According to some example embodiments, the underbody shield 200 is generally mounted to a portion of the underside of the vehicle's frame, for example, with one or more fasteners. Optionally, a shield 200 can be mounted with the adhesive fiber cap layer, or with other fasteners, couplings, etc.

According to another example embodiment, the non-woven material can be used for an engine compartment shield or heat shield insulation 300, for example, for attachment to the underside of a vehicle's hood H (see **Figure 7**). In example embodiments, the shield 300 preferably comprises the base layer 20 and at least one fiber cap layer 30. According to one example form, one or more fasteners, clips, couplings, or other interengagement members 350 are provided for fastening the shield 300 to the hood H. In example forms, the shield 300 generally comprises a molded shield member 310, which is generally sized and shaped to be fitted to the underside of the hood H, for example, such that a barrier is provided between the underside of the hood H and the vehicle's engine. According to one example embodiment, the base layer 20 is generally positioned adjacent the vehicle's engine. According to another example embodiment, the shield 300 comprises a fiber cap layer 30 on both the top and bottom side of the base layer 20. In some example forms, one of the fiber cap layers comprises an adhesive fiber for adhering to an additional film, foam, or other generally smooth material that is proximal the vehicle's engine. According to yet another example form, a fiber cap layer is provided on both the bottom and top side of the base layer, and after molding, the fiber cap layers provide a smooth and substantially rigid surface 320. Preferably, the shield 300 is heat resistant to at least 110º C, 180º C, or about 220º C. According to another example embodiment, the shield 300 can be configured for acting as a shield over one or more exhaust components of a vehicle.

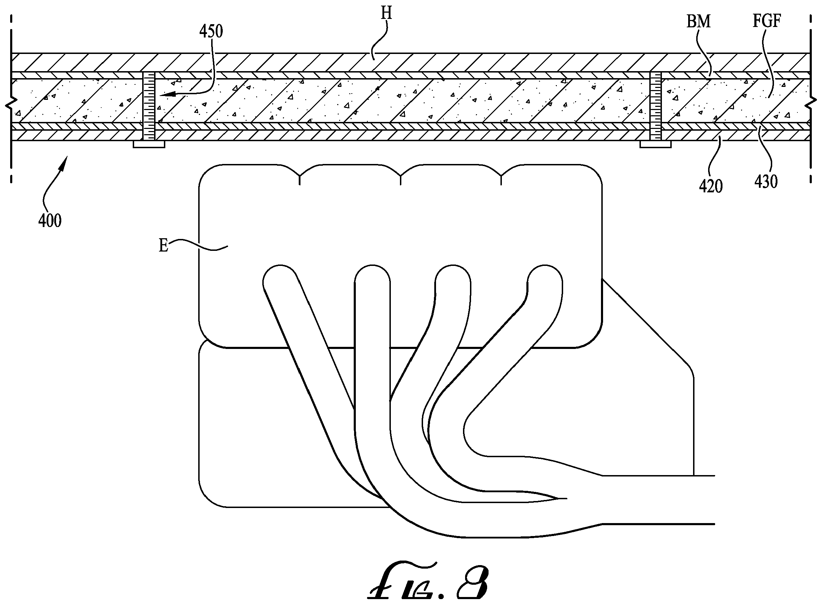

**Figure 8** shows an engine compartment shield or heat shield insulation 400 according to another example embodiment. In example embodiments, the shield 400 generally comprises a base layer 420, a fiber cap layer 430, a layer of foam or glass fiber FGF, and a backing material BM. In example embodiments, the non-woven material (e.g., base layer 420 and fiber cap layer 430) is bonded to the foam or glass fiber layer FGF, for example, wherein the fiber cap layer 430 allows for bonding of the non-woven material to the foam or glass fiber layer FGF. The backing material BM can be bonded to the other side of the foam or glass fiber layer FGF as desired, or for example, may be free floating. In example embodiments, the shield 400 is mounted to the underside or interior surface of the hood H, for example, with one or more clips or fasteners 450. According to example embodiments, one or more clips 450 extend entirely through the shield 400 and couple to portions of the underside of the hood H. In some example embodiments, the clips 450 provide for permanently mounting the shield 400 to the underside of the hood H. Alternatively, the clips 450 can provide for removable engagement of the shield 400 with the underside of the hood H, for example, to allow for removable and/or replacement of the shield 400 with the hood H. Preferably, the shield 300 is heat resistant to at least about 220º C, for example, to shield the heat of the engine.

According to some example embodiments of the present invention, by providing a fiber cap layer 30 on either side of the base layer 20, the integral non-woven material preferably provides a substantial reduction in road noise or sound, for example, thereby providing superior sound absorption properties. For example, regardless of whether the vehicle component is a wheel house liner 100, an underbody shield 200, an engine compartment shield 300, or other vehicle components, a substantial reduction in noise has been found to be contributed to the fiber cap layers 30 being applied and needle-punched into both the top and bottom sides of the base layer. Optionally, according to additional example embodiments of the present invention, one or more additional materials or layers can be provided to either fiber cap layer, for example, to further enhance the sound absorption properties. In example embodiments, the fiber cap layer 30 can be molded to/with the base layer (and one or more additional fiber cap layers) to increase sound absorption properties as desired.

According to additional example embodiments, the present invention comprises a non-woven material comprising a needle-punch nonwoven base layer and a fiber cap layer. As described above, the fiber cap layer can be (1) used as an adhesive layer to bond the base layer to another material, (2) molded in order to create a smooth film surface that reduces ice, mud and snow buildup in the automotive part, or (3) molded to increase stability and reduce sagging in the automotive part. The non-woven material or molded automotive component can be heat-resistant, flame-resistant, water-resistant, and/or recyclable.

While the invention has been described with reference to preferred and example embodiments, it will be understood by those skilled in the art that a variety of modifications, additions and deletions are within the scope of the invention, as defined by the claims.

For the avoidance of doubt, the disclosure extends to the subject-matter of the following numbered clauses:
Clause 1. A non-woven material comprising: a base layer comprising a top side and a bottom side; and a fiber cap layer configured to overlie at least one of the sides of the base layer.
Clause 2. The non-woven material of Clause 1, wherein the fiber cap layer comprises a non-woven fibrous coating material layed onto the scrim base layer, and needle-punched into the base layer to form an integral non-woven material.
Clause 3. The non-woven material of Clause 2, wherein the non-woven fibrous coating material is carded onto the base layer, and needle-punched into the base layer to form an integral non-woven material.
Clause 4. The non-woven material of Clause 1, wherein the base layer comprises a non-woven fibrous batting material comprising a plurality of fibers formed from at least one material selected from PET, CoPET, PET Undrawn, PET modified, PET undrawn Co-pet, PET PP and PET PE and combinations thereof.
Clause 5. The non-woven material of Clause 4, wherein the base layer comprises 100% PET fiber.
Clause 6. The non-woven material of Clause 4, wherein the fibers comprise a nominal length of about 50 - 102 millimeters and a denier between 1.7 and 10.
Clause 7. The non-woven material of Clause 6, wherein the base layer comprises a density of between about 2 ounces per square yard of material to about 200 ounces per square yard of material.
Clause 8. The non-woven material of Clause 7, wherein the base layer comprises a density of between about 2 ounces per square yard of material to about 70 ounces per square yard of material.
Clause 9. The non-woven material of Clause 1, wherein the fiber cap layer comprises an adhesive fiber material.
Clause 10. The non-woven material of Clause 9, wherein the fiber cap layer comprises a plurality of fibers formed from at least one material selected from Bico PET fiber, PE fiber, PP fiber, co-polyesters, undrawn polyester, modified polyesters, and undrawn Bico Polyester and combinations thereof.
Clause 11. The non-woven material of Clause 10, wherein the fibers comprise a nominal length of about 30-120 millimeters and a denier between 1.0 and 8.
Clause 12. The non-woven material of Clause 11, wherein the fiber cap layer comprises a density of about 0.25 ounce per square yard of material to about 50 ounces per square yard of material.
Clause13. The non-woven material of Clause 12, wherein the fiber cap layer comprises a density of about 0.5 ounce per square yard of material to about 10 ounces per square yard of material.
Clause 14. The non-woven material of Clause 9, wherein the fibers forming the fiber cap layer comprise an undrawn amorphous PET fiber having a melting point of about 165ºC.
Clause 15. The non-woven material of Clause 9, wherein the fibers forming the fiber cap layer comprise a Crystalline type LMF RM or a modified polyester.
Clause 16. The non-woven material of Clause 1, further comprising a fiber cap layer applied to the bottom side of the base layer.
Clause 17. The non-woven material of Clause 16, wherein with the fiber cap layer applied to each side of the base layer, the resulting material provides for enhanced sound absorption.
Clause 18. An automotive component formed from a non-woven material comprising: a base layer comprising a non-woven fibrous batting material having a top side and a bottom side; and a fiber cap layer applied to at least one of the sides of the base layer.
Clause 19. The automotive component of Clause 18, wherein the fiber cap layer comprises a non-woven fibrous coating material applied onto the scrim base layer, and needle-punched into the base layer to form an integral non-woven material.
Clause 20. The automotive component of Clause 19, wherein the base layer comprises a non-woven fibrous batting material comprising a plurality of fibers formed from at least one material selected from PET, CoPET, PET Undrawn, PET modified, PET undrawn Co-pet, PET PP and PET PE and combinations thereof.
Clause 21. The automotive component of Clause 20, wherein the fiber cap layer comprises a plurality of fibers formed from at least one material selected from Bico PET fiber, PE fiber, PP fiber, co-polyesters, undrawn polyester, modified polyesters, and undrawn Bico Polyester and combinations thereof.
Clause 22. The automotive component of Clause 21, wherein the non-woven material can be molded by pressure and heat-forming to form a component for attachment to a vehicle.
Clause 23. The automotive component of Clause 22, wherein the component comprises a wheel house liner, an underbody shield, or an engine compartment or exhaust component heat shield.
Clause 24. The automotive component of Clause 23, wherein the molded component comprises flame-resistant and water-repellent properties, and is configured to reduce ice and mud build-up.
Clause 25. The automotive component of Clause 24, further comprising a fiber cap layer applied on to the other side of the base layer, and needle-punched into the base layer to form an integral non-woven material of three layers.
Clause 26. A method of forming a non-woven material comprising: providing a base layer formed from a non-woven fibrous batting material comprising a plurality of fibers, the base layer comprising a top side and a bottom side; providing a fiber cap layer comprising a non-woven fibrous coating material; applying the fiber cap layer onto a top side of the base layer; and needle-punching the fiber cap layer into the base layer to form an integral non-woven material.
Clause 27. The method of Clause 26, wherein the fiber cap layer is layed onto the base layer.
Clause 28. The method of Clause 26, wherein the fiber cap layer is carded onto the base layer.
Clause 29. The method of Clause 26, further comprising applying a second fiber cap layer onto a bottom side of the base layer.
Clause 30. The method of Clause 29, further comprising needle-punching the second fiber cap layer into the base layer to form an integral non-woven material.
Clause 31. The method of Clause 26, further comprising molding the non-woven material by pressure and heat-forming to form an automotive component.

## Claims

1. A non-woven material comprising:
a base layer comprising a top side and a bottom side; and
a fiber cap layer configured to overlie at least one of the sides of the base layer.

2. The non-woven material of Claim 1, wherein the fiber cap layer comprises a non-woven fibrous coating material layed onto the scrim base layer, and needle-punched into the base layer to form an integral non-woven material;
wherein the non-woven fibrous coating material may be carded onto the base layer.

3. The non-woven material of Claim 1, wherein the base layer comprises 100% PET; or
wherein the base layer comprises a non-woven fibrous batting material comprising a plurality of fibers formed from at least one material selected from PET, CoPET, PET Undrawn, PET modified, PET undrawn Co-pet, PET PP and PET PE and combinations thereof; wherein the fibers may comprise a nominal length of about 50 - 102 millimeters and a denier between 1.7 and 10.

4. The non-woven material of Claim 3, wherein the base layer comprises a density of between about 2 ounces per square yard of material to about 200 ounces per square yard of material, such as a density of between about 2 ounces per square yard of material to about 70 ounces per square yard of material.

5. The non-woven material of Claim 1, wherein the fiber cap layer comprises an adhesive fiber material.

6. The non-woven material of any preceding claim, wherein the fiber cap layer comprises a plurality of fibers formed from at least one material selected from Bico PET fiber, PE fiber, PP fiber, co-polyesters, undrawn polyester, modified polyesters, and undrawn Bico Polyester and combinations thereof; and wherein the fibers may comprise a nominal length of about 30-120 millimeters and a denier between 1.0 and 8.

7. The non-woven material of Claim 6, wherein the fiber cap layer comprises a density of about 0.25 ounce per square yard of material to about 50 ounces per square yard of material, such as a density of about 0.5 ounce per square yard of material to about 10 ounces per square yard of material.

8. The non-woven material of Claim 5, wherein the fibers forming the fiber cap layer comprise an undrawn amorphous PET fiber having a melting point of about 165ºC; or a Crystalline type LMF RM or a modified polyester.

9. The non-woven material of Claim 1, further comprising a fiber cap layer applied to the other side of the base layer, which may be the bottom side of the base layer; and wherein the further fiber cap layer may be needle-punched into the base layer to form an integral non-woven material of three layers.

10. An automotive component formed from a non-woven material in accordance with any of claims 1-9; wherein the base layer comprises a non-woven fibrous batting material and wherein the fiber cap layer is applied to at least one of the sides of the base layer.

11. The automotive component of Claim 10, wherein the non-woven material can be molded by pressure and heat-forming to form a molded component for attachment to a vehicle, which may comprise a wheel house liner, an underbody shield, or an engine compartment or exhaust component heat shield; and which may comprise flame-resistant and water-repellent properties, and may be configured to reduce ice and mud build-up.

12. A method of forming a non-woven material comprising:
providing a base layer formed from a non-woven fibrous batting material comprising a plurality of fibers, the base layer comprising a top side and a bottom side;
providing a fiber cap layer comprising a non-woven fibrous coating material;
applying the fiber cap layer onto a top side of the base layer; and
needle-punching the fiber cap layer into the base layer to form an integral non-woven material.

13. The method of Claim 12, wherein the fiber cap layer is layed onto the base layer; and/or is carded onto the base layer.

14. The method of Claim 12, further comprising applying a second fiber cap layer onto a bottom side of the base layer and optionally needle-punching the second fiber cap layer into the base layer to form an integral non-woven material.

15. The method of Claim 12, further comprising molding the non-woven material by pressure and heat-forming to form an automotive component.
